# EUROPEAN PATENT SPECIFICATION

(11) **EP 0 271 839 B1**
(45) Date of publication and mention of the grant of the patent: **06.03.1996**
(21) Application number: 87118391.9
(22) Date of filing: 11.12.1987
(51) Int. Cl.: C08G 18/38, C08G 18/75, C08K 5/02, C08K 5/17, C08K 5/52, C08K 5/54, B29C 33/60

(54) **Casting polymerisation process for preparing sulfur-containing urethane resin lens**
Giess-Polymerisationsverfahren zur Herstellung von Schwefel enthaltenden Urethanharzlinsen
Procédé de polymérisation de coulée pour la préparation d'une lentille de résine d'uréthane contenant du soufre

(30) Priority: 15.12.1986 JP 298198/86; 10.03.1987 JP 54353/87; 15.04.1987 JP 92685/87
(43) Date of publication of application: 22.06.1988
(73) Proprietor: MITSUI TOATSU CHEMICALS, Inc., Chiyoda-Ku Tokyo 100 (JP)
(72) Inventor: Sasagawa, Katsuyoshi, Yokohama-shi, Kanagawa-ken (JP); Kanemura, Yoshinobu, Yokohama-shi, Kanagawa-ken (JP); Imai, Masao, Yokohama-shi, Kanagawa-ken (JP)
(74) Representative: Schüler, Horst, Dr.

(56) References cited:
- EP-A- 235 743
- EP-A- 268 896
- EP-A- 0 138 130
- EP-A- 0 155 116
- WO-A-86/01215
- US-A- 4 220 727
- PATENT ABSTRACTS OF JAPAN, vol. 10, no. 56 (C-331)[2113], 6th March 1986; & JP-A-60 199 016
- Römpps Chemie-Lexicon, 7th and 8th Ed. Franckh'sche Verlagshanlung Stuttgart, 1981, p.1546; 1977, pp. 3494-3498; 1985, 3169/3170.

## Description

### BACKGROUND OF THE INVENTION

### 1. Field of the Invention

The present invention elates to a process for preparing a sulfur-containing urethane resin lens from a polyisocyanate and a polythiol by casting polymerization.

### 2. Description of the Prior Art

In recent years, urethane resins have been widely used also as bumpers for automobiles and parts for machines. Heretofore, in order to manufacture such parts by the casting polymerization of a polyisocyanate and a polyol, a metallic mold is previously treated with a suitable external release agent to form a film on the surface of the mold. This treatment intends to enable the easy release of a polymerized urethane resin from the mold.

The inventors of the present application have paid their attention to the fact that a sulfur-containing urethane resin has a high refractive index and a low dispersion for a visible ray, and they have researched the application of the urethane resin to optical parts such as lenses and the like. As a result, they have found the following. In the manufacture of the lenses for spectacles and the like, an extremely high surface accuracy is required. However, in the case that a conventional known fluorine series release agent or silicon series release agent is used to form a mold, made of a glass or a metal, release film it is difficult to form the mold release film having a uniform thickness. In consequence, it is hard to maintain the surface accuracy of the lens at a constant level, and when released from a mold, a mold release film is often trasferred to a part or all of the surface of the sulfur-containing urethane lens, which impairs the surface state of the lens remarkably.

From EP-A-235 743 it is known to incorporate the mold release agent into the resin mixture.

Hence, the present inventors have investigated with the intention of seeking an internal release agent in place of the external release agent. The above-mentioned internal release agent means a release agent which can display a releasing effect, when added to the mixture of a polyisocyanate and a polythiol, without treating the lens matrix made of a glass or a metal with the external release agent. Heretofore, as the internal release agents which can be used in the casting polymerization of the polyisocyanate and the polyol, there are known zinc stearate (Japanese Patent Provisional Publication No. 245622/1985), a hydrogenized castor oil (Japanese Patent Provisional Publication No. 255835/1985) and carboxyalkylsiloxanes (Japanese Patent Provisional Publication No. 38044/1984). However, when each of these known releasing compounds was applied to the mixture of the polyisocyanate and the polythiol, the resultant mixture got cloudy owing to a low compatibility, and in addition, a polymerized product could not be released from the used mold.

### SUMMARY OF THE INVENTION

Therefore, an object of the present invention is to provide a casting polymerization process for preparing a sulfur-containing urethane resin lens by which the lens having a high transparency and surface accuracy and being easily released from a lens matrix.

The present invention is directed to a process for preparing a sulfur-containing urethane resin lens, by a casting polymerizing process which is characterized in that in casting polymerizing polyisocyanate having two or more isocyanate groups and polythiol having two or more thiol groups in a lens matrix made of glass or metal, a surface active agent, which comprises one or more selected from the group consisting of fluorine nonionic surface active agents, silicon nonionic surface active agents, alkyl quaternary ammonium salts and acidic phosphate esters, is previously added to the mixture of said polyisocyanate and said polythiol; wherein the equivalent ratio of the polyisocyanate to polythiol is within the range of 0.5 to 3.0, and the surface active agent is used in an amount of at least 1 ppm, preferably in an amount within the range 1 to 5000 ppm, based on the mixture of polyisocyanate and polythiol.

### DESCRIPTION OF THE PREFERRED EMBODIMENTS

The present inventors have reseached a variety of compounds, and as a result, they have found that if the one or more members selected from the groups consisting of fluorine series nonionic surface active agents, silicon series nonionic surface active agents, alkyl quaternary ammonium salts and acidic phosphate esters is previously added, as an internal release agent, to the mixture of polyisocyanates and polythiols, a sulfur-containing urethane resin lens which has been casting-polymerized is easily released from a lens matrix, and in addition the thus obtained lens maintains a high transparency and has an extremely good surface accuracy. Hence, the present invention has been completed on the basis of this knowledge.

That is, the present invention is connected with a casting polymerization process for preparing a sulfur-containing urethane resin lens which is characterized in that in casting-polymerizing polyisocyanate having two or more isocyanate groups and polythiol having two or more thiol groups in a lens matrix made of a glass or a metal, a surface active agent, which comprises one or more selected from the group consisting of fluorine series nonionic surface active agents, silicon series nonionic surface active agents, alkyl quaternary ammonium salts and acidic phosphate esters, is previously added, as an internal release agent, to the mixture of the polyisocyanate and the polythiol, whereby a sulfur-containing urethane resin lens having a good surface accuracy can be prepared.

Examples of the polyisocyanates having two or more isocyanate groups which are used in the present invention include m-xylylene diisocyanate, p-xylylene diisocyanate, tetrachloro-m-xylylene diisocyanate, 1,3-bis(α,α,-dimethyl isocyanate methyl)benzene, 1,4-bis(α,α,-dimethyl isocyanate methyl)benzene, hexamethylene diisocyanate, isophorone diisocyanate, tolylene diisocyanate, 4,4ʹ-diphenylmethane diisocyanate, biuret reaction products of hexamethylene diisocynanate, adducts of hexamethylene diisocyanate and trimethylolpropane, 4,4ʹ-dicyclohexylmethane diisocyanate and lysine isocyanate-β-ethyl isocyanate esters. Of these compounds, the particularly preferable ones are aromatic diisocyanates such as xylylene diisocyanates and bis(α,α,-dimethyl isocyanate methyl)benzenes in which the alkyl group on a side chain is substituted by isocyanate group, and aliphatic diisocyanates such as isophorone diisocyanate and hexamethylene diisocyanate, because they heighten a weather resistance of the finished sulfur-containing urethane resin lens and, in particular, have a less inclination of the discoloration into a yellow tone with time. Further, xylylene diisocyanates are especially preferable in which the rate of the casting polymerization is suitably high and which can provide the sulfur-containing urethane resin lens with a high refractive index.

Examples of the polythiols each having two or more thiol groups include di(2-mercaptoethyl) ether, 1,2-ethanedithiol, 1,4-butanedithiol, di(2-mercaptoethyl) sulfide, ethylene glycol dithioglycolate, trimethylol propanetris-(thioglycolate), pentaerythritoltetrakis(2-mercapto acetate), pentaerythritoltetrakis(3-mercapto propionate), dipentaerythritolhexakis(3-mercapto propionate), dipentaerythritolhexakis(2-mercapto acetate), 1,2-dimercaptobenzene, 4-methyl-1,2-dimercaptobenzene, 3,6-dichloro-1,2-dimercaptobenzene, 3,4,5,6-tetrachloro-1,2-dimercaptobenzene, o-xylylenedithiol, m-xylylenedithiol, p-xylylenedithiol and 1,3,5-tris(3-mercaptopropyl) isocyanurate. Of these compounds, the particularly preferable ones are pentaerythritoltetrakis(3-mercapto propionate), dipentaerythritolhexakis(3-mercapto propionate), xylylenedithiol and 1,3,5-tris(3-mercaptopropyl)isocyanurate in which it is not difficult to control the polymerization reaction in the course of the casting polymerization and the polymerization reaction can make progress in a relatively moderate condition.

A ratio of the polyisocyanate to the polythiol is within the range of 0.5 to 3.0, preferably 0.5 to 1.5 in terms of a molar ratio of NCO/SH.

Further, for the purpose of accelerating the polymerization reaction of the polyisocyanate and the polythiol, a polymerization catalyst such as dibutyltin dilaurate or dimethyltin chloride may be added in an amount of 0.01 to 1.0% by weight based on the total weight of the polyisocyanate and the polythiol.

Further, the fluorine series nonionic surface active agent and the silicon series nonionic surface active agent used in the present invention each have a perfluoroalkyl group, a dimethylpolysiloxane group, a hydroxyalkyl group, or a phosphate ester group in the molecule. The concrete examples of the former fluorine series nonionic surface active agents include Unidain DS-401 (Daikin Kogyo Co., Ltd.), Unidain DS-403 (Daikin Kogyo Co., Ltd.), F-Top EF122A (Shin-akita Chemical Co., Ltd.), F-Top EF126 (Shin-akita Chemical Co., Ltd.) and F-Top EF301 (Shin-akita Chemical Co., Ltd.) which are trade names, and the concrete example of the latter silicon series nonionic surface active agent is an experimental product Q2-120A made by Dow Chemical Co. in U.S.A. which is a trade name.

The alkyl quaternary ammonium salts used in the present invention are usually known as cation surface active agents and include halogen salts, phosphates, sulfates of the alkyl quaternary ammoniums. The examples in the form of chlorides thereof include trimethylcetyl ammonium chloride, trimethylstearyl ammonium chloride, dimethylethylcetyl ammonium chloride, triethyldodecyl ammonium chloride, trioctylmethyl ammonium chloride and diethylcyclohexyldodecyl ammonium chloride.

Furthermore, examples of the acidic phosphate esters used in the present invention include isopropyl acid phosphate, diisopropyl acid phosphate, butyl acid phosphate, dibutyl acid phosphate, octyl acid phosphate, dioctyl acid phosphate, isodecyl acid phosphate, diisodecyl acid phosphate, tridecanol acid phosphate and bis(tridecanol acid) phosphate as well as mixtures of one or more thereof.

The above-mentioned surface active agent is used alone or in the form of a mixture of two or more kinds in an amount within the range of 1 to 5,000 ppm based on the total weight of the polyisocyanate and the polythiol. When the amount of the surface active agent is less than 1 ppm, a mold release performance is extremely bad, and when it is more than 5,000 ppm, a lens release from the lens matrix made of a glass or a metal takes place in the course of the casting polymerization, so that the lens obtained by the casting polymerization has a poor surface accuracy and is liable to get cloudy unpreferably.

Now, reference will be made to the manufacturing procedure of optical parts such as various lenses in accordance with the present invention.

To the mixture of the polyisocyanate and the polythiol in a predetermined ratio, 5,000 ppm or less of a surface active agent which is usable in the present invention is added, and if necessary, a polymerization catalyst such as dibutyltin dilaurate or dimethyltin chloride mentioned above is further added thereto in a predetermined amount. The resultant mixture is then poured into a mold which has been formed by the combination of a lens matrix made of a glass or metal and a gasket made of a polyethylene, followed by heating/curing. After cooling, a molded lens of a urethane resin containing sulfur is released from the mold, thereby obtaining the desired lens. A time necessary for the casting polymerization is usually from 3 to 24 hours at a temperature of 30 to 120°C, depending on kinds of the polyisocyanate and the polythiol and the heating conditions.

According to the casting polymerization process of the present invention, the obtained lens of the sulfur-containing urethane resin can be easily released from the lens matrix, and the surface of the thus obtained lens has a high transparency and a good surface accuracy. Therefore, it is fair to say that the casting polymerization of the present invention permits providing the excellent sulfur-containing urethane resin lens.

### EXAMPLES

Now, the present invention will be described in detail in reference to examples, but it should not be limited to these examples. In the examples, parts are on a weight basis, unless otherwise specified.

### Example 1

A uniformly mixed solution of 94 parts of m-xylylene diisocyanate, 122 parts of pentaerythritoltetrakis(mercapto propionate), 0.05 part of dibutyltin dilaurate and 100 ppm of a fluoride series nonionic surface active agent (Unidain DS-401, Daikin Kogyo Co., Ltd.) was poured into a mold formed by the combination of a lens matrix made of two glass plates and a gasket made of a polyethylene. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release phenomenon did not occur, and after the cooling, the release of the lens from the glass matrix was easy. In addition, the surface of the thus obtained lens maintained a high transparency and had a good surface accuracy.

### Example 2

A uniformly mixed solution of 100 parts of p-xylylene diisocyanate, 90 parts of m-xylylenedithiol, 0.1 parts of dibutyltin dilaurate and 150 ppm of a silicon series nonionic surface active agent (an experimental product Q2-120A of Dow Chemical Co. in U.S.A.) was poured into a mold formed by the combination of a lens matrix made of two glass plates and a polythiol type gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 3

A uniformly mixed solution of 188 parts of m-xylylene diisocyanate, 140 parts of 1,3,5-tris(3-mercaptopropyl) isocyanurate, 68 parts of m-xylylenedithiol, 0.1 part of dibutyltin dilaurate, 50 ppm of a fluoride series nonionic surface active agent (Unidain DS-403, Daikin Kogyo Co., Ltd.) and 100 ppm of silicon series nonionic surface active agent (an experimental product Q2-120A of Dow Chemical Co. in U.S.A.) was poured into a mold formed by the combination of a lens matrix made of two glass plates and a gasket made of a polyethylene. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency.

### Example 4

The same procedure as in Example 1 was repeated with the exception that 100 ppm of the fluoride series nonionic surface active agent (Unidain DS-401, Daikin Kogyo Co., Ltd.) was replaced with 500 ppm of another fluoride series nonionic surface active agent (F-Top EF122A, Shin-akita Chemical Co., Ltd.), in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 5

The same procedure as in Example 2 was repeated with the exception that 150 ppm of the silicon series nonionic surface active agent (an experimental product Q2-120A of Dow Chemical Co. in U.S.A.) was replaced with 250 ppm of a fluoride series nonionic surface active agent (F-Top EF126, Shin-akita Chemical Co., Ltd.), in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 6

The same procedure as in Example 1 was repeated with the exception that 100 ppm of the fluoride series nonionic surface active agent (Unidain DS-401, Daikin Kogyo Co., Ltd.) was replaced with 200 ppm of another fluoride series nonionic surface active agent (F-Top EF301, Shin-akita Chemical Co., Ltd.), in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 7

A uniformly mixed solution of 94 parts of m-xylylene diisocyanate as a polycyanate having two or more isocyanate groups, 122 parts of pentaerythritoltetrakis(mercapto propionate) as a polythiol having two or more thiol groups, 0.05 part of dibutyltin dilaurate as a polymerization catalyst and 500 ppm of trimethylcetyl ammonium chloride as an alkylquaternary ammonium salt was poured into a mold formed by the combination of a lens matrix made of two glass plates and a polyethylene gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 8

A uniformly mixed solution of 100 parts of p-xylylene diisocyanate, 90 parts of m-xylylenedithiol, 0.1 part of dibutyltin dilaurate and 1,000 ppm of trimethylstearyl ammonium chloride was poured into a mold formed by the combination of a lens matrix made of two glass plates and a polyethylene gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 9

A uniformly mixed solution of 188 parts of m-xylylene diisocyanate, 40 parts of 1,3,5-tris(3-mercaptopropyl) isocyanurate, 68 parts of m-xylylenedithiol, 0.1 part of dibutyltin dilaurate and 2,000 ppm of dimethylethylcetyl ammonium chloride was poured into a mold formed by the combination of a lens matrix made of two glass plates and a polyethylene gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not take place, and after the cooling, the release of the lens from the glass matrix was easy. In addition, the surface of the thus obtained lens maintained a high transparency.

### Example 10

The same procedure as in Example 7 was repeated with the exception that 500 ppm of trimethylcetyl ammonium chloride was replaced with 1,000 ppm of triethyldodecyl ammonium bromide, in order to obtain a lens of a sulfur-containing urethane resin. During the polymerization, any mold release did not occur, and after the cooling, the release of the lens from the glass matrix was easy. In addition, the surface of the thus obtained lens maintained a high transparency and had a good surface accuracy.

### Example 11

The same procedure as in Example 7 was repeated with the exception that 500 ppm of trimethylcetyl ammonium chloride was replaced with 1,000 ppm of trioctylmethyl ammonium phosphate, in order to obtain a lens of a sulfur-containing urethane resin. During the polymerization, any mold release phenomenon did not take place, and after the cooling, the release of the lens from the glass matrix was easy. In addition, the surface of the thus obtained lens maintained a high transparency and had a good surface accuracy.

### Example 12

The same procedure as in Example 7 was repeated with the exception that 500 ppm of trimethylcetyl ammonium chloride was replaced with 1,000 ppm of diethylcyclohexyldodecyl ammonium sulfate, in order to obtain a sulfurcontaining urethane resin lens. During the polymerization, any mold release did not occur, and after the cooling, the release of the lens from the glass matrix was easy. In addition, the surface of the thus obtained lens maintained a high transparency and had a good surface accuracy.

### Example 13

A uniformly mixed solution of 94 parts of m-xylylene diisocyanate, 122 parts of pentaerythritoltetrakis(mercapto propionate), 0.05 part of dibutyltin dilaurate and 500 ppm of a diisopropyl acid phosphate was poured into a mold formed by the combination of a lens matrix made of two glass plates and a polyethylene gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 14

A uniformly mixed solution of 100 parts of p-xylylene diisocyanate, 90 parts of m-xylylenedithiol, 0.1 part of dibutyltin dilaurate and 1,000 ppm of dibutyl acid phosphate was poured into a mold formed by the combination of a lens matrix made of two glass plates and a gasket made of a polyethylene. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 15

A uniformly mixed solution of 188 parts of m-xylylene diisocyanate, 140 parts of 1,3,5-tris(3-mercaptopropyl) isocyanurate, 68 parts of m-xylylenedithiol, 0.1 part of dibutyltin dilaurate and 1,000 ppm of octyl acid phosphate was poured into a mold formed by the combination of a lens matrix made of two glass plates and a polyethylene gasket. The mixture was then heated therein for 6 hours at 50°C, for 2 hours at 80°C, for 2 hours at 90°C, and for 2 hours at 110°C in order to carry out polymerization, and after cooling, a sulfur-containing urethane resin lens was then released from the mold. During the polymerization, any mold release did not occur, and after the cooling, the release of the lens from the glass matrix was easy. In addition, the surface of the thus obtained lens maintained a high transparency and had a good surface accuracy.

### Example 16

The same procedure as in Example 13 was repeated with the exception that 500 ppm of a diisopropyl acid phosphate was replaced with 1,000 ppm of dioctyl acid phosphate, in order to obtain a lens of a sulfur-containing urethane resin. During the polymerization, any mold release phenomenon did not occur, and after the cooling, the release of the lens from the glass matrix was easy. In addition, the surface of the thus obtained lens maintained a high transparency and had a good surface accuracy.

### Example 17

The same procedure as in Example 13 was repeated with the exception that 500 ppm of a diisopropyl acid phosphate was replaced with 1,000 ppm of isodecyl acid phosphate, in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 18

The same procedure as in Example 13 was repeated with the exception that 500 ppm of a diisopropyl acid phosphate was replaced with 1,000 ppm of bis(tridecanol acid) phosphate, in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 19

The same procedure as in Example 1 was repeated with the exception that 94 parts of m-xylylene diisocyanate was replaced with 172 parts of 1,3-bis(α,α-dimethyl isocyanate methyl)benzene, in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 20

The same procedure as in Example 2 was repeated with the exception that 90 parts of m-xylylenedithiol was replaced with 46 parts of dipentaerythritolhexakis(3-mercapto propionate), in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 21

The same procedure as in Example 3 was repeated with the exception that 188 parts of m-xylylene diisocyanate was replaced with 168 parts of hexamethylene diisocyanate, in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Example 22

The same procedure as in Example 9 was repeated with the exception that 188 parts of m-xylylene diisocyanate was replaced with 223 parts of isophorone diisocyanate, in order to obtain a sulfur-containing urethane resin lens. During the polymerization, any mold release did not occur, and after the cooling, the release of the lens from the glass matrix was easy. In addition, the surface of the thus obtained lens maintained a high transparency and had a good surface accuracy.

### Comparative Example 1

The same procedure as in Example 1 was repeated with the exception that the fluorine series nonionic surface active agent (Unidain DS-401) was not added, in order to carry out heat polymerization. When cooling was performed after the heat polymerization, a sulfur-containing urethane resin lens was still stuck to the lens matrix made of a glass without being released therefrom.

### Comparative Example 2

The same procedure as in Example 1 was repeated with the exception that any fluorine series nonionic surface active agent (Unidain DS-401) was not added and the lens matrix made of a glass was replaced another lens matrix made of a glass which had been formed by first dipping the lens matrix used in Example 1 into a mixed solution of 100 parts of Diefree-MS-181 (an external release agent manufactured by Daikin Kogyo Co., Ltd.) and 500 parts of acetone, then taking out the matrix slowly therefrom, air-drying it, and treating the surface of the matrix with the release agent. When cooling was performed after the heat polymerization, the mold release of the resultant sulfur-containing urethane resin lens was easy, but a part of the releasing agent was transferred to the surface of the lens and therefore the latter was partially opaque.

### Comparative Example 3

The same procedure as in Example 7 was repeated with the exception that trimethylcetyl ammonium chloride was not used, in order to carry out heat polymerization. When cooling was performed, the resultant urethane resin lens was was still stuck to the lens matrix made of a glass without being released therefrom.

### Comparative Example 4

The same procedure as in Comparative Example 3 was repeated with the exception that the lens matrix made of a glass was replaced with another lens matrix made of a glass which had been formed by first dipping the lens matrix used in Comparative Example 3 into a mixed solution of 100 parts of Diefree-MS-181 (an external release agent made by Daikin Kogyo Co., Ltd.) and 500 parts of acetone, then taking out the matrix slowly therefrom, and air-drying it, in order to carry out heat polymerization. When cooling was performed after the polymerization, the mold release of the resultant sulfur-containing urethane resin lens was easy, but a part of the release agent was transferred to the surface of the lens and therefore the latter was partially opaque.

### Comparative Example 5

The same procedure as in Example 13 was repeated with the exception that diisopropyl acid phosphate was not used. When cooling was performed after heat polymerization, the resultant urethane resin lens was still stuck to the lens matrix made of a glass without being released therefrom.

### Comparative Example 6

The same procedure as in Comparative Example 5 was repeated with the exception that the lens matrix made of a glass was replaced another lens matrix made of a glass which had been formed by first dipping the lens matrix used in Comparative Example 5 into a mixed solution of 100 parts of Diefree-MS-181 (an external release agent made by Daikin Kogyo Co., Ltd.) and 500 parts of acetone, then taking out the matrix slowly therefrom, and air-drying it. When cooling was performed after polymerization, the mold release of the resultant sulfur-containing urethane resin lens was easy, but a part of the release agent was transferred to the surface of the lens and thus the latter was partially opaque.

## Claims

1. A process for preparing a sulfur-containing urethane resin lens, by a casting polymerizing process which is characterized in that in casting polymerizing polyisocyanate having two or more isocyanate groups and polythiol having two or more thiol groups in a lens matrix made of glass or metal, a surface active agent, which comprises one or more selected from the group consisting of fluorine nonionic surface active agents, silicon nonionic surface active agents, alkyl quaternary ammonium salts and acidic phopsphate esters, is previously added to the mixture of said polyisocyanate and said polythiol;
wherein the equivalent ratio of the polyisocyanate to polythiol is within the range of 0.5 to 3.0, and the surface active agent is used in an amount of at least 1 ppm based on the mixture of polyisocyanate and polythiol.

2. A casting polymerization process for preparing a sulfur-containing urethane resin lens according to Claim 1 wherein the surface active agent is an acidic phosphate ester.

3. A casting polymerization process for preparing a sulfur-containing urethane resin lens according to Claim 1 wherein the surface active agent which comprises one or more selected from the group consisting of fluorine nonionic surface active agents, silicon nonionic surface active agents and alkyl quaternary ammonium salts is used in an amount within the range of 1 to 5000 ppm based on the mixture of polyisocyanate and polythiol.

4. A casting polymerization process for preparing a sulfur-containing urethane resin lens according to Claim 1 wherein said polyisocyanate is an aliphatic diisocyanate.

5. A casting polymerizatiion process for preparing a sulfur-containing urethane resin lens according to Claim 1 wherein said polyisocyanate comprises one or more selected from the group consisting of xylylene diisocyanate, bis (α,α-dimethyl isocyanate methyl) benzene, isophorone diisocyanate and hexamethylene diisocyanate.

6. A casting polymerization process for preparing a sulfur-containing urethane resin lens according to Claim 1 wherein as said polythiol, there is used one or more selected from the group consisting of pentaerythritoltetrakis (3-mercaptopropionate), dipentaerythritolhexakis (3-mercapto propionate), xylylenedithiol and 1,3,5-tris (3-mercapto propyl) isocyanurate.

7. A casting polymerization process for preparing a sulfur-containing urethane resin lens according to Claim 1 wherein said fluorine nonionic surface active agents are nonionic surface active agents having a perfluoralkyl group and a hydroxyalkyl group or a phosphate ester group in the molecule.

8. A casting polymerization process for preparing a sulfur-containing urethane resin lens according to Claim 1 wherein said silicon nonionic surface active agents are nonionic surface active agents having a dimethylsiloxane group and a hydroxyalkyl group or a phosphate ester group in the molecule.

9. A casting polymerization process for preparing a sulfur-containing urethane resin lens according to Claim 1 wherein said alkyl quaternary ammonium salt comprises one or more selected from the group consisting of halogen salts, phosphates and sulfates of trimethylcetyl ammonium, trimethylstearyl ammonium, dimethylethylcetyl ammonium, triethyldodecyl ammonium, trioctylmethyl ammonium and diethylcyclohexyldodecyl ammonium.

10. A casting polymerization process for preparing a sulfur-containing urethane resin lens according to Claim 1 wherein said acidic phosphate ester comprises one or more selected from the group consisting of isopropyl acid phosphate, diisopropyl acid phosphate, butyl acid phosphate, dibutyl acid phosphate, octyl acid phosphate, dioctyl acid phosphate, isodecyl acid phosphate, diisodecyl acid phosphate, tridecanol acid phosphate and bis(tridecanol acid) phosphate.

## Patentansprüche

1. Verfahren zur Herstellung einer schwefelhaltigen Urethanharz-Linse durch ein Gießpolymerisationsverfahren, das dadurch gekennzeichnet ist, daß Polyisocyanat mit zwei oder mehr Isocyanatgruppen und Polythiol mit zwei oder mehr Thiolgruppen in einer aus Glas oder Metall hergestellten Linsen-Matrix gießpolymerisiert wird, ein oberflächenaktives Mittel,das eines oder mehrere, ausgewählt aus der Gruppe bestehend aus nicht-ionischen Fluoroberflächenaktiven Mitteln, nicht-ionischen Siliconoberflächenaktiven Mitteln, quaternären Alkylammeniumsalzen und sauren Phosphatestern umfaßt, zuvor zu der Mischung aus besagtem Polyisocyanat und besagtem Polythiol zugegeben wird;
worin das Äquivalentverhältnis des Polyisocyanats zu Polythiol im Bereich von 0,5 bis 3,0 liegt und das oberflächenaktive Mittel in einer Menge von wenigstens 1 ppm, bezogen auf die Mischung aus Polyisocyanat und Polythiol verwendet wird.

2. Gießpolymerisationsvefahren zur Herstellung einer schwefelhaltigen Urethanharz-Linse gemäß Anspruch 1, worin das oberflächenaktive Mittel ein saurer Phosphatester ist.

3. Gießpolymerisationsverfahren zur Herstellung einer schwefelhaltigen Urethanharz-Linse gemäß Anspruch 1, worin das oberflächenaktive Mittel,das eines oder mehrere ausgewählt aus der Gruppe bestehend aus nicht-ionischen Fluor-oberflächenaktiven Mitteln,nicht-ionischen Siliconoberflächenaktiven Mitteln und quaternären Alkylammoniumsalzeni umfaßt, in einer Menge im Bereich von 1 bis 5 000 ppm, bezogen auf die Mischung aus Polyisocyanat und Polythiol, verwendet wird.

4. Gießpolymerisationsverfahren zur Herstellung einer schwefelhaltigen Urethanharz-Linse gemäß Anspruch 1, worin besagtes Polyisocyanat ein aliphatisches Diisocyanat ist.

5. Gießpolymerisationsverfahren zur Herstellung einer schwefelhaltigen Urethanharz-Linse gemäß Anspruch 1, worin besagtes Polyisocyanat eines oder mehrere ausgewählt aus der Gruppe bestehend aus Xylylen-diisocyanat, Bis (α,α-dimethylisocyanatmethyl)benzol, Isophorondiisocyanat und Hexamethylen-diisocyanat, umfaßt.

6. Gießpolymerisationsverfahren zur Herstellung einer schwefelhaltigen Urethanharz-Linse gemäß Anspruch 1, worin als besagtes Polythiol eines oder mehrere ausgewählt aus der Gruppe bestehend aus Pentaerythritoltetrakis(3-mercaptopropionat); Dipentaerythritolhexakis-(3-mercaptopropionat), Xylylendithiol und 1,3,5-Tris-(3-mercaptopropyl)isocyanurat, verwendet wird.

7. Gießpolymerisationsverfahren zur Herstellung einer schwefelhaltigen Urethanharz-Linse gemäß Anspruch 1, worin besagte nicht-ionische Fluor-oberflächenaktive Mittel nicht-ionische oberflächenaktive Mittel mit einer Perfluoralkylgruppe und einer Hydroxyalkylgruppe oder einer Phosphatestergruppe in dem Molekül sind.

8. Gießpolymerisationsverfahren zur Herstellung einer schwefelhaltigen Urethanharz-Linse gemäß Anspruch 1, worin besagte nicht-ionische Silicon-oberflächenaktive Mittel nicht-ionische oberflächenaktive Mittel mit einer Dimethylsiloxangruppe und einer Hydroxyalkylgruppe oder einer Phosphatestergruppe in dem Molekül sind.

9. Gießpolymerisationsverfahren zur Herstellung einer schwefelhaltigen Urethanharz-Linse gemäß Anspruch 1, worin besagtes quaternäres Alkylammoniumsalz eines oder mehrere, ausgewählt aus der Gruppe bestehend aus Halogensalzen, Phosphaten und Sulfaten von Trimethylcetylammonium, Trimethylstearylammonium, Dimethylethylcetylammonium, Triethyldodecylammonium, Trioctylmethylammonium und Diethylcyclohexyldodecylammonium, umfaßt.

10. Gießpolymerisationsverfahren zur Herstellung einer schwefelhaltigen Urethanharz-Linse gemäß Anspruch 1, worin besagter saurer Phosphatester einer oder mehrere, ausgewählt aus der Gruppe bestehend aus Isopropylsäurephosphat, Diisopropylsäurephosphat, Butylsäurephosphat, Dibutylsäurephosphat,Octylsäurephosphat, Dioctylsäurephosphat, Isodecylsäurephosphat, Diisodecylsäurephosphat, Tridecanolsäurephosphat und Bi-(tridecabolsäure)phosphat, umfaßt.

## Revendications

1. Procédé pour préparer une lentille de résine uréthannique contenant du soufre, selon un procédé de polymérisation par coulée, qui est caractérisé en ce que, dans la polymérisation par coulée d'un polyisocyanate ayant deux groupes isocyanates ou davantage et d'un polythiol ayant deux groupes thiols ou davantage dans une matrice pour lentille faite de verre ou de métal, on ajoute, préalablement, au mélange dudit polyisocyanate et dudit polythiol, un agent tensio-actif qui comprend un ou plusieurs agents choisis dans le groupe constitué par les agents tensio-actifs non ioniques fluorés, les agents tensio-actifs non ioniques siliciés, les sels d'alkylammonium quaternaire et les esters phosphates acides ;
où le rapport des équivalents du polyisocyanate au polythiol est dans la gamme de 0,5 à 3,0 et l'agent tensio-actif est utilisé en une proportion d'au moins 1 ppm relativement au mélange du polyisocyanate et du polythiol.

2. Procédé de polymérisation par coulée pour préparer une lentille de résine uréthannique contenant du soufre selon la revendication 1, où l'agent tensio-actif est un ester phosphate acide.

3. Procédé de polymérisation par coulée pour préparer une lentille de résine uréthannique contenant du soufre selon la revendication 1, où l'agent tensio-actif qui comprend un ou plusieurs de ceux du groupe constitué par les agents tensio-actifs non ioniques fluorés, les agents tensio-actifs non ioniques siliciés et les sels d'alkylammonium quaternaire, est utilisé en une proportion comprise dans la gamme de 1 à 5 000 ppm relativement au mélange du polyisocyanate et du polythiol.

4. Procédé de polymérisation par coulée pour préparer une lentille de résine uréthannique contenant du soufre selon la revendication 1, où ledit polyisocyanate est un diisocyanate aliphatique.

5. Procédé de polymérisation par coulée pour préparer une lentille de résine uréthannique contenant du soufre selon la revendication 1, où ledit polyisocyanate comprend un ou plusieurs de ceux du groupe constitué par le xylylènediisocyanate, le bis(α,α-diméthylisocyanatométhyl)benzène, l'isophorone diisocyanate et l'hexaméthylène diisocyanate.

6. Procédé de polymérisation par coulée pour préparer une lentille de résine uréthannique contenant du soufre selon la revendication 1, où, comme dit polythiol, on utilise un ou plusieurs de ceux du groupe constitué par le tétrakis(3-mercaptopropionate) de pentaérythritol, l'hexakis(3-mercaptopropionate) de dipentaérythritol, le xylylènedithiol et le 1,3,5-tris(3-mercaptopropyl)isocyanurate.

7. Procédé de polymérisation par coulée pour préparer une lentille de résine uréthannique contenant du soufre selon la revendication 1, où lesdits agents tensio-actifs non ioniques fluorés sont des agents tensio-actifs non ioniques ayant un groupe perfluoroalkyle et un groupe hydroxyalkyle ou un groupe ester phosphate dans la molécule.

8. Procédé de polymérisation par coulée pour préparer une lentille de résine uréthannique contenant du soufre selon la revendication 1, où lesdits agents tensio-actifs non ioniques silicés sont des agents tensio-actifs non ioniques ayant un groupe diméthylsiloxane et un groupe hydroxyalkyle ou un groupe ester phosphate dans la molécule.

9. Procédé de polymérisation par coulée pour préparer une lentille de résine uréthannique contenant du soufre selon la revendication 1, où ledit sel d'alkylammonium quaternaire comprend un ou plusieurs de ceux du groupe constitué par les sels d'halogène, les phosphates et les sulfates de triméthylcétylammonium, de triméthylstéarylammonium, de diméthyléthylcétylammonium, de triéthyldodécylammonium, de trioctylméthylammonium et de diéthylcyclohexyldodécylammonium.

10. Procédé de polymérisation par coulée pour préparer une lentille de résine uréthannique contenant du soufre selon la revendication 1, où ledit ester phosphate acide comprend un ou plusieurs de ceux du groupe constitué par le phosphate acide d'isopropyle, le phosphate acide de diisopropyle, le phosphate acide de butyle, le phosphate acide de dibutyle, le phosphate acide d'octyle, le phosphate acide de dioctyle, le phosphate acide d'isodécyle, le phosphate acide de diisodécyle, le phosphate acide de tridécanol et le phosphate de biss(tridécanol acide).
